# EUROPÄISCHE PATENTANMELDUNG

(11) **EP 1 175 073 A2**
(43) Veröffentlichungstag der Anmeldung: **23.01.2002**
(21) Anmeldenummer: 00125308.7
(22) Anmeldetag: 28.11.2000
(51) Int. Cl.: H04M 3/42

(54) **Telefonvermittlungssystem und -verfahren zur anonymen Anrufherstellung**

(30) Priorität: 17.07.2000 DE 10035445
(71) Anmelder: Dirk Direct-Sistemas de Telecomunicacones E servicos sociedade/Unipessoal, LDA, 9270-036 Santa Porto Moniz (PT)
(72) Erfinder: Peckl, Christian, 84032 Altdorf (DE)
(74) Vertreter: VOSSIUS & PARTNER

(57) **Zusammenfassung**

Die Erfindung betrifft ein Telefonvermittlungssystem und -verfahren zur anonymen Anrufweiterleitung, bei dem Rufnummem des Telefonvermittlungssystems in Zusammenhang mit Inseraten als Kontaktadresse veröffentlicht werden, wobei jede Rufnummer einem Benutzer bzw. Inserenten zugeordnet ist, und das Telefonvermittlungssystem unter der veröffentlichten Rufnummer eingehende Anrufe abhängig von vom Benutzer vorgegebenen Einstellungen an die Teilnehmernummer des Benutzers weiterleitet, so daß dieser gegebenenfalls anonym bleiben kann.

## Beschreibung

Die Erfindung betrifft ein Telefonvermittlungssystem und ein Telefonvermittlungsverfahren zur anonymen Anrufweiterleitung. Insbesondere betrifft die Erfindung ein Telefonvermittlungssystem und -verfahren für den Einsatz in Zusammenhang mit der Veröffentlichung von Inseraten, bei denen der Inserent anonym bleiben möchte.

Bei Inseraten beispielsweise in Zeitungen ist es bekannt, Chiffre-Nummern zu vergeben und mit dem Inserat zu veröffentlichen, wenn der Inserent anonym bleiben möchte. Interessenten, die auf das Inserat antworten wollen, wenden sich schriftlich an den Verlag bzw. die Stelle, der bzw. die das Inserat veröffentlicht hat. Dabei wird die veröffentlichte Chiffre-Nummer angegeben, so daß die eingehende Antwort dem jeweiligen Inserenten zugeordnet werden kann. Dieser kann daraufhin unerkannt die eingehenden Reaktionen prüfen und selbst entscheiden, gegenüber welchem Interessenten die Anonymität fallengelassen werden kann.

Dieses bekannte Verfahren ist mit dem Nachteil behaftet, daß es sehr zeitaufwendig ist. Nachdem das Inserat veröffentlicht ist, muß ein Interessent zunächst seine Antwort zu Papier bringen und diese per Post an den Verlag übermitteln. Beim Verlag selbst werden die eingehenden Antworten gesammelt und es vergeht wiederum viel Zeit, bis die Antworten den Inserenten erreichen.

Im Stand der Technik sind Telefonvermittlungssysteme bekannt, die für eine große Anzahl von Benutzern eine Telefonnummer bereitstellen (sogenannte "call center"). Die unter dieser Rufnummer eingehenden Anrufe werden von dem Telefonvermittlungssystem an freie Arbeitsplätze weitervermittelt. D.h. eine Weitervermittlung erfolgt abhängig von der Verfügbarkeit eines bestimmten Arbeitsplatzes. Es ist auch möglich, für diese Art von Telefonvermittlungssystem feste Anrufzeiten vorzugeben und Anrufern, die außerhalb dieser Anrufzeit anrufen, eine entsprechende Ansage vorzuspielen. Dieses bekannte Telefonvermittlungssystem eignet sich jedoch nicht für einen Einsatz im Zusammenhang mit der Veröffentlichung von Inseraten, da die erforderliche Anonymität in beide Richtungen, d.h. des Anrufers und des Angerufenen nicht gegeben ist.

Bei einem anderen bekannten Telefonvermittlungssystem wird einem einzelnen Benutzer eine feste Rufnummer zugeteilt (System "0700") und unter dieser Nummer eingehende Anrufe werden abhängig von Benutzervorgaben an den Ort weitervermittelt, an dem sich der Benutzer gerade aufhält (beispielsweise Büro, Wohnung etc.). Dieses System ist jedoch für den Einsatz im Zusammenhang mit der Veröffentlichung von Inseraten ungeeignet, da unabhängig von der Weitervermittlung an einen bestimmten Ort der Anrufer nicht anonym bleibt (die Rufnummer des Anrufers wird dem Empfänger angezeigt) und auch der Angerufene zwangsläufig durch die Bekanntgabe seiner Rufnummer seine Anonymität preisgibt.

Demgegenüber liegt der Erfindung die Aufgabe zugrunde, ein Telefonvermittlungssystem und ein -verfahren bereitzustellen, das die Kontaktaufnahme zwischen Inserenten und Interessenten erleichtert und beschleunigt und insbesondere eine anonyme Kontaktaufnahme ermöglicht. Diese Aufgabe wird mit einem Telefonvermittlungssystem gemäß Anspruch 1 und einem Telefonvermittlungsverfahren gemäß Anspruch 15 gelöst.

Die Erfindung geht von dem Grundgedanken aus, bei Inseraten eine Chiffre-Nummer in Form einer Telefonnummer zu veröffentlichen. Diese Telefonnummer ist einem Telefonvermittlungssystem zugeordnet, das als Puffer bzw. Filter zwischen Benutzer (z.B. Inserent) und Anrufer (z.B. Interessent) wirkt. Interessenten, die mit einem Inserenten in Kontakt treten wollen, wählen die im Inserat angegebene Rufnummer des Telefonvermittlungssystems und werden von diesem abhängig von vom Benutzer vorgegebenen Einstellungen an den dem Inserat zugeordneten Inserenten weitervermittelt bzw. weitergeleitet. Das erfindungsgemäße Telefonvermittlungssystem entkoppelt dabei die Verbindung "Anrufer - Telefonvermittlungssystem" von der Verbindung "Telefonvermittlungssystem - Benutzer". Mit anderen Worten, es findet kein direkter Datenaustausch zwischen Anrufer und Benutzer statt (abgesehen von dem persönlichen Gespräch bei erfolgreichem Verbindungsaufbau), d.h. das Telefonvermittlungssystem meldet die tatsächliche Rufnummer des Benutzers nicht an den Anrufer zurück (der Anrufer erhält für den Fall, daß ein ISDN-Telefon für den Anruf benutzt wird, keine Meldung in der Art "weitergeleitet zu Rufnummer XYZ"). Ebenso wird dem Benutzer die Rufnummer des Fernsprechers, von dem aus angerufen wird, nicht mitgeteilt, bzw. angezeigt. Dies ermöglicht erfindungsgemäß eine in beide Richtungen anonyme Kontaktaufnahme zwischen Anrufer und Benutzer des Telefonvermittlungssystems.

Das erfindungsgemäße Telefonvermittlungssystem weist dazu eine Speichereinrichtung auf, in der die Zuordnung zwischen der veröffentlichten Rufnummer des Telefonvermittlungssystems und dem Inserenten, d.h. dem Benutzer des Telefonvermittlungssystems gespeichert ist. Femer sind in dieser Speichereinrichtung die "tatsächlichen" Teilnehmerrufnummern der Benutzer (beispielsweise zu Hause oder im Büro) gespeichert. Eine Weiterleitungseinrichtung ordnet den unter der veröffentlichten Rufnummer des Telefonvermittlungssystems eingehenden Anruf dem zugehörigen Inserenten bzw. Benutzer zu und leitet den Anruf anhand der gespeicherten Teilnehmerrufnummer des Benutzers abhängig von vorgegebenen Einstellungen an den Benutzer weiter. Vorzugsweise werden diese Einstellungen vom jeweiligen Benutzer selbst vorgegeben bzw. programmiert. Bei der Weitervermittlung wird die Daten- bzw. Signalübertragung vom Anrufer zum Telefonvermittlungssystem und vom Telefonvermittlungssystem zum Benutzer entkoppelt.

In einer bevorzugten Ausführungsform weist das erfindungsgemäße Telefonvermittlungssystem eine Einrichtung auf, die dem Benutzer die Weiterleitung eines Anrufes eines Interessenten zunächst ankündigt bevor der Anruf zum Benutzer durchgestellt wird. Auf diese Weise kann der Benutzer den eingehenden Anruf anonym entgegennehmen, da er über den eingehenden Anruf vorgewarnt wird und sich nach der Warnung ohne Nennung des Namens melden kann. Diese Ankündigung des Telefonvermittlungssystems an den Benutzer ist entweder eine fest vorgegebene Ankündigung des Systems oder alternativ durch den Benutzer individuell vorgebbar.

Die Vorgabe von eigenen Texten für die Ankündigung eines Anrufes ist dann vorteilhaft, wenn ein Benutzer mehrere Rufnummern des Telefonvermittlungssystems verwendet (beispielsweise unterschiedliche Inserate). In diesem Fall kann jeder unterschiedlichen Rufnummer des Telefonvermittlungssystems eine andere Ankündigung bzw. Erkennungs-Ansage zugeordnet werden (beispielsweise "Kindermädchen-Anzeige vom 3. Oktober" oder "Vermietung der 4-Zimmer-Wohnung in der Sudetenstraße 32"). Abhängig von der gewählten Rufnummer des Telefonvermittlungssystems durch einen Interessenten wird dem Benutzer vor der Weiterleitung des Anrufes die zugehörige Ankündigung übermittelt.

In einer bevorzugten Ausführungsform weist das erfindungsgemäße Telefonvermittlungssystem eine Einrichtung auf, die den Benutzer vor der Weiterleitung des eingehenden Anrufes auffordert, eine ihm zugeordnete Geheimzahl einzugeben. Diese wird anschließend vom System überprüft und der Anruf wird nur dann weitergeleitet, wenn die korrekte Geheimnummer eingegeben wurde. Dies verhindert, daß andere Personen die über das erfindungsgemäße Telefonvermittlungssystem eingehenden Anrufe entgegennehmen können. Dies ist vor allem dann vorteilhaft, wenn eine Teilnehmerrufnummer von mehreren Personen genutzt wird. Für den Fall, daß eine falsche Geheimnummer eingegeben wird, bricht das Telefonvermittlungssystem die Verbindung zu der Teilnehmerrufnummer ab und meldet dem Anrufer automatisch, daß der Benutzer unter seiner Teilnehmerrufnummer nicht erreicht werden konnte.

In einer bevorzugten Ausführungsform weist das Telefonvermittlungssystem eine Einrichtung auf, die dem Anrufer zunächst eine vom Benutzer vorgegebene Ansage übermittelt, bevor die Anwahl bzw. die Weiterleitung der Teilnehmerrufnummer des Benutzers erfolgt. Diese Ansage erfolgt vorzugsweise unabhängig davon, ob das System den Benutzer erreicht oder nicht. Auf diese Weise kann der Benutzer jedem Anrufer vorab eine bestimmte Grundinformation zukommen lassen. Anhand dieser Grundinformation kann der Anrufer beispielsweise entscheiden, ob er das Gespräch überhaupt fortführen will. Ferner erlaubt diese Ansage einer Grundinformation, daß der Benutzer diese Informationen nicht bei jedem Anrufer selbst erzählen muß.

Bevorzugt weist das Telefonvermittlungssystem eine Gesprächsvoranmeldungseinrichtung auf. Diese Einrichtung fordert den Anrufer auf, einen beliebigen Text zu sprechen und speichert diesen. Dieser gespeicherte Text wird dem Benutzer vor der Weiterleitung des Anrufes vorgespielt, so daß dieser den Anrufer daran erkennen und entscheiden kann, ob er den Anruf annehmen oder ablehnen möchte. Die Bereitstellung dieser Einrichtung ist für den Fall besonders vorteilhaft, daß der Benutzer dann Anrufe direkt abweisen kann, wenn er sich durch einen bestimmten Anrufer belästigt fühlt. Besonders bevorzugt ist die Gesprächsvoranmeldungseinrichtung derart ausgebildet, daß verschiedene Ablehnungstexte gespeichert sind, die dem Anrufer bei Ablehnung des Anrufes vorgespielt werden. Vorzugsweise sind vier verschiedene Ablehnungstexte speicherbar. Die verschiedenen Texte sind vom Benutzer vorgebbar bzw. programmierbar und können über die Telefontastatur abgerufen werden. Beispielsweise ertönt bei Drücken der Taste 1: "Leider kommt ihr Anruf gerade ungelegen. Bitte rufen Sie in ein paar Minuten noch einmal an". In einer alternativen Ausführungsform wird diese Funktion "Ablehnungstext" auch dann bereitgestellt, wenn der Anrufer nicht nach einem beliebigen Text gefragt wird.

In einer bevorzugten Ausführungsform weist das Telefonvermittlungssystem eine Einrichtung auf, in der Nachrichten eines Anrufers gespeichert werden können. Beispielsweise ist dies eine Mailbox. Vorzugsweise wird die Mailbox dann aktiviert, wenn der Benutzer einen Anruf gerade nicht annehmen kann. Der Anrufer hat dann zumindest die Möglichkeit, eine Nachricht zu hinterlassen. Vorzugsweise wird der Benutzer vom Telefonvermittlungssystem in regelmäßigen Abständen angerufen, wenn neue Nachrichten gespeichert wurden, und übermittelt die gespeicherten Nachrichten während der gültigen Anrufzeiten.

Bevorzugt weist das Telefonvermittlungssystem eine Einrichtung zum Speichern von vom Benutzer vorgegebenen Anrufzeiten auf. Dies hat den Vorteil, daß nur innerhalb der vom Benutzer vorgegebenen Zeiten das Telefonvermittlungssystem versucht, Anrufe an den Benutzer weiterzuleiten. Außerhalb der vorgegebenen Zeitintervalle werden die Anrufer vom Telefonvermittlungssystem zurückgewiesen oder - sofern vorhanden - zur Mailbox geleitet. Das Abweisen des Anrufers kann vorzugsweise über eine Ansage erfolgen, beispielsweise "Sie rufen außerhalb der Anrufzeiten an. Bitte versuchen sie es Montag zwischen 19 und 21 Uhr". Die Anrufzeiten sind entweder für jeden Wochentag gleich vorgegeben oder alternativ für einzelne Wochentage individuell wählbar. Die individuelle Speicherung von Anrufzeiten erfolgt vorzugsweise dadurch, daß für die gesamte Woche ein einheitliches Anrufintervall vorgegeben wird und erst danach die davon abweichenden Wochentage programmiert werden.

In einer weiter bevorzugten Ausführungsform weist das Telefon-vermittlungssystem eine Einrichtung zum Sperren der veröffentlichten Rufnummer des Telefonvermittlungssystems auf. In dieser Ausführungsform wird jedem Anrufer eine automatische Ansage übermittelt, daß die Rufnummer gesperrt wurde. Es erfolgt keine Weiterleitung mehr an die Teilnehmerrufnummer. In dieser Ausführungsform werden die eingehenden Anrufe vorzugsweise an die Mailbox weitergeleitet oder/und eine persönliche Ansage übermittelt.

Das erfindungsgemäße Telefonvermittlungssystem ist vorzugsweise derart ausgebildet, daß die Rufnummer, die im Inserat veröffentlicht wird, nach einer vorgegebenen Zeit automatisch gelöscht bzw. deaktiviert wird. Dies erfolgt beispielsweise nach einem Monat. Für den Fall, daß ein Benutzer die Nummer über einen längeren Zeitraum aktiviert haben möchte, kann diese um einen bestimmten Zeitraum, beispielsweise einen Monat oder ein Jahr verlängert werden.

Bevorzugt ist das Telefonvermittlungssystem derart ausgebildet, daß der Benutzer seine im System abgelegte Teilnehmerrufnummer ändern kann, d.h. eine neue Teilnehmerrufnummer ablegen kann. Nach erfolgter Änderung der Teilnehmerrufnummer werden die unter der Rufnummer des Vermittlungssystems eingehenden Anrufe zur neuen Teilnehmerrufnummer weitergeleitet.

Bevorzugt weist das Telefonvermittlungssystem eine Einrichtung zum Ändern der vom Benutzer vorgegebenen Einstellungen auf. Diese Änderungseinrichtung weist vorzugsweise eine Spracherkennungseinrichtung auf. Wenn ein Benutzer Änderungen vornehmen möchte, beispielsweise eine Änderung der Anrufzeiten, Besprechen neuer Ansagetexte usw. setzt er sich über eine Servicetelefonnummer mit dem Telefonvermittlungssystem in Verbindung. Hier erfolgt zunächst die Eingabe einer PIN-Nummer zur Identifikation des Benutzers. Daraufhin erfolgt durch Spracheingabe die Auswahl des entsprechenden Änderungsmenüs. Wird beispielsweise das Wort "Anrufzeiten" gesprochen, wird der Benutzer von der Änderungseinrichtung in das entsprechende Untermenü übergeben und aufgefordert, entweder einen Wochentag zu sagen oder "Woche", um Anrufzeiten für die gesamte Woche festzulegen. Daraufhin werden weitere Eingabeanweisungen dem Benutzer übermittelt. Die Eingabe der Anrufzeit erfolgt über die Telefontastatur und benötigt vorzugsweise insgesamt acht Ziffern, vier für den Anfang und vier für das Ende der Anrufzeit. Wenn ein Benutzer zeitweise gar nicht oder nur teilweise erreichbar sein möchte, ist vorzugsweise die Taste # zu drücken, nachdem "Woche" gesprochen wurde. Danach kann entweder der Tag der Wiederreichbarkeit eingegeben werden oder einzelne Wochentage bestimmt werden, an denen der Benutzer erreichbar ist.

Auch die weiteren Änderungen von Einstellungen erfolgen über entsprechende Schlüsselwörter, wie beispielsweise "Sperren" für das Sperren der Rufnummer des Telefonvermittlungssystems, "Erkennungs-Ansage" zur Änderung der Ansage, die dem Benutzer vor der Vermittlung des eingegangenen Anrufes übermittelt wird, "Mailbox" zum Einrichten und Abhören der Mailbox, "Ansage" zur Eingabe des Ansagetextes, mit dem dem Anrufer zu Beginn eine Grundinformation übermittelt wird, "Geheimzahl" zum Aktivieren der Geheimzahlfunktion, "Gesprächsvoranmeldung" zum Aktivieren der Funktion, daß das Telefonvermittlungssystem zunächst den Namen des Anrufers speichert und übermittelt, so daß der Anruf gegebenenfalls abgelehnt werden kann, "Rufnummer" zum Ändern der gespeicherten Teilnehmerrufnummer und "PIN" zum Ändern des PINs und der Geheimzahl.

Für den Fall, daß der Benutzer während einer gültigen Anrufzeit nicht anwesend ist, wartet das Telefonvermittlungssystem ein bestimmtes Zeitintervall ab (beispielsweise 7 Rufzeichen) bis der Anrufer darüber informiert wird, daß der Gesprächspartner nicht antwortet. Vorzugsweise hat der Anrufer dann die Möglichkeit, eine Nachricht auf der Mailbox zu hinterlassen.

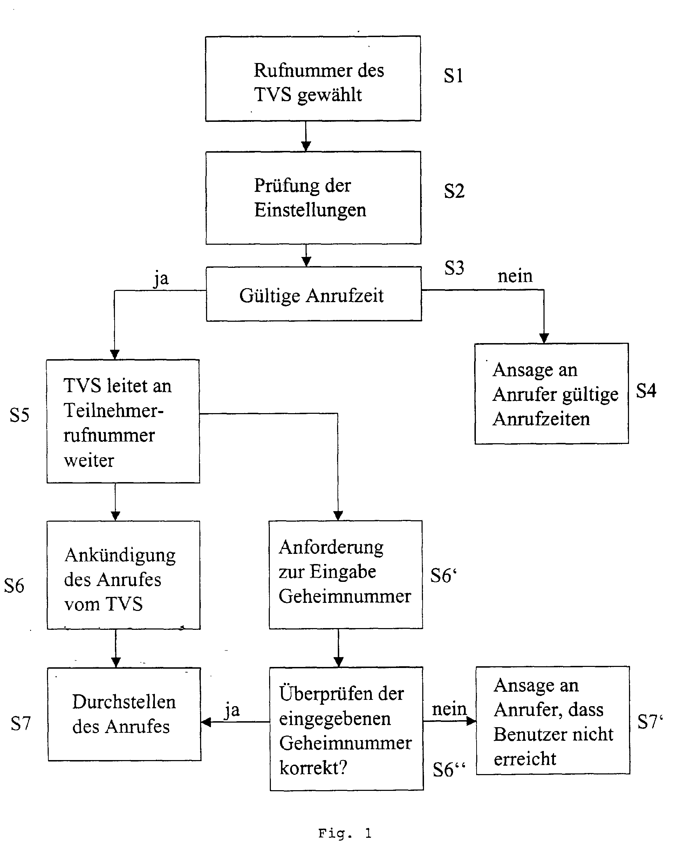

Die Erfindung wird nachstehend mit Bezug auf die beigefügte Zeichnung näher erläutert.

Die beigefügte Figur zeigt schematisch den Ablauf der Telefonvermittlung für zwei bevorzugte Ausführungsformen.

Nachdem in Schritt S1 die im Inserat veröffentlichte Rufnummer des Telefonvermittlungssystems (TVS) gewählt wurde, werden in Schritt S2 vom Telefonvermittlungssystem die für den zugeordneten Benutzer vorgegebenen Einstellungen überprüft. In der dargestellten Ausführungsform ist ein Anrufzeitfenster programmiert. Wenn der Anruf in Schritt S3 nicht zu einer gültigen Anrufzeit erfolgt, d.h. außerhalb des vorgegebenen Zeitintervalles liegt, erfolgt in Schritt S4 eine Ansage an den Anrufer. Beispielsweise werden ihm die gültigen Anrufzeiten mitgeteilt. Erfolgt der Anruf während des vorgegebenen Zeitintervalles, setzt sich das Telefonvermittlungssystem in Schritt S5 mit dem Benutzer über seine Teilnehmerrufnummer in Verbindung. In Schritt S6 erfolgt die Ankündigung des Anrufes vom Telefonvermittlungssystem. Anschließend erfolgt in Schritt S7 das Durchstellen des Anrufes.

In einer alternativen Ausführungsform, die ebenfalls in der Figur dargestellt ist, wird nach Schritt S5 der Benutzer zunächst zur Eingabe einer Geheimnummer aufgefordert (Schritt S6'). Die eingegebene Geheimnummer wird in Schritt S6" auf ihre Richtigkeit überprüft. Sofern die Geheimnummer korrekt ist, wird in Schritt S7 der Anrufer durchgestellt. Ist die eingegebene Geheimnummer nicht korrekt, wird der Anrufer in Schritt S7' darüber informiert, daß der Benutzer derzeit nicht erreichbar ist.

## Patentansprüche

1. Telefonvermittlungssystem zur anonymen Anrufweiterleitung, **dadurch gekennzeichnet,**
**daß** das Telefonvermittlungssystem mehrere Rufnummern hat, die jeweils Benutzern des Telefonvermittlungssystems zugeordnet sind;
**daß** das Telefonvermittlungssystem eine Speichereinrichtung zum Speichern der Zuordnung jeder Rufnummer des Telefonvermittlungssystems zu einem bestimmten Benutzer des Telefonvermittlungssystems und dessen Teilnehmerrufnummer, und zum Speichern der Teilnehmerrufnummer des jeweiligen Benutzers aufweist; und
**daß** das Telefonvermittlungssystem eine Einrichtung aufweist, die einen unter einer der mehreren Rufnummern des Telefonvermittlungssystems eingehenden Anruf abhängig von dieser Rufnummer zugeordneten vorgegebenen individuellen Einstellungen an die Teilnehmerrufnummer des Benutzers weiterleitet,
wobei das Telefonvermittlungssystem die Verbindung zwischen Anrufer und Telefonvermittlungssystem von der Verbindung zwischen Telefonvermittlungssystem und Benutzer entkoppelt.

2. Telefonvermittlungssystem nach Anspruch 1, wobei die der Rufnummer zugeordneten vorgegebenen Einstellungen vom jeweiligen Benutzer vorgegeben sind.

3. Telefonvermittlungssystem nach Anspruch 1 oder 2, ferner mit einer Einrichtung, die dem Benutzer die Weiterleitung eines Anrufes ankündigt, bevor der Anruf von der Weiterleitungseinrichtung durchgestellt wird.

4. Telefonvermittlungssytem nach Anspruch 3, wobei die Ankündigungseinrichtung den Benutzer darüber informiert, von welcher Rufnummer des Telefonvermittlungssystems der Anruf stammt, falls dem Benutzer mehrere Rufnummern des Telefonvermittlungssystems zugeordnet sind.

5. Telefonvermittlungssystem nach einem der Ansprüche 1 bis 4, ferner mit einer Einrichtung zum Aufnehmen und Überprüfen einer Geheimzahl vom Benutzer, wobei die Weiterleitungseinrichtung den Anruf nur dann durchstellt, wenn vom Benutzer die korrekte Geheimzahl eingegeben wird.

6. Telefonvermittlungssystem nach einem der Ansprüche 1 bis 5, ferner mit einer Ansageeinrichtung, die an den Anrufer eine vorgegebene Ansage ausgibt, bevor der Anruf von der Weiterleitungseinrichtung an die Teilnehmerrufnummer weitergeleitet wird.

7. Telefonvermittlungssystem nach Anspruch 6, wobei die Ansageeinrichtung eine vom Benutzer vorgegebene Ansage ausgibt.

8. Telefonvermittlungssystem nach einem der Ansprüche 1 bis 7, ferner mit einer Einrichtung zum Speichern eines beliebigen Textes des Anrufers und zum Ausgeben dieses Textes an den Benutzer.

9. Telefonvermittlungssystem nach Anspruch 8, wobei dem Anrufer abhängig von einer Telefontastatureingabe des Benutzers eine vom Benutzer vorgegebene Ansage ausgegeben wird.

10. Telefonvermittlungssystem nach einem der Ansprüche 1 bis 9, femer mit einer Einrichtung zum Speichern von Nachrichten des Anrufers.

11. Telefonvermittlungssystem nach einem der Ansprüche 1 bis 10, femer mit einer Einrichtung zum Speichern von vom Benutzer vorgegebenen Anrufzeiten, wobei die Weiterleitungseinrichtung einen eingehenden Anruf nur innerhalb der vorgegebenen Anrufzeiten an die Teilnehmerrufnummer weiterleitet.

12. Telefonvermittlungssystem nach einem der Ansprüche 1 bis 11, ferner mit einer Deaktivierungseinrichtung, die die Rufnummer des Telefon-vermittlungssystems nach einer von dem Benutzer vorgegebenen Zeit deaktiviert.

13. Telefonvermittlungssystem nach einem der Ansprüche 1 bis 12, femer mit einer Änderungseinrichtung zum Ändern der vorgegebenen Einstellungen durch den Benutzer.

14. Telefonvermittlungssystem nach Anspruch 13, wobei die Änderungseinrichtung eine Spracherkennungseinrichtung aufweist.

15. Telefonvermittlungsverfahren zur anonymen Anrufweiterleitung bei dem Rufnummern eines Telefonvermittlungssystems in Zusammenhang mit Inseraten als Kontaktadresse veröffentlicht werden, wobei jede Rufnummer des Telefonvermittlungssystems einem Benutzer des Telefonvermittlungssystems zugeordnet ist und der Benutzer des Telefonvermittlungssystems die Kontaktperson für das jeweilige Inserat ist, und bei dem unter den Rufnummern des Telefonvermittlungssystems eingehende Anrufe vom Telefonvermittlungssystem abhängig von vorgegebenen Einstellungen an die Teilnehmerrufnummer des Benutzers weitergeleitet werden, wobei das Telefonvermittlungssystem die Verbindung zwischen Anrufer und Telefonvermittlungssystem von der Verbindung zwischen Telefonvermittlungssystem und Benutzer entkoppelt.
